# EUROPEAN PATENT APPLICATION

(11) **EP 4 456 375 A1**
(43) Date of publication of application: **30.10.2024**
(21) Application number: 24167923.2
(22) Date of filing: 29.03.2024
(51) Int. Cl.: H02J 9/06, H02J 7/02, H02M 7/219

(54) **CIRCUIT TOPOLOGY AND POWER SUPPLY**

(30) Priority: 28.04.2023 CN 202310486054; 28.04.2023 CN 202310486060; 28.04.2023 CN 202310483895; 28.04.2023 CN 202310483904; 28.04.2023 CN 202310486065
(71) Applicant: KEHUA DATA CO., LTD., Xiamen, Fujian 361101 (CN); ZHANGZHOU KEHUA ELECTRIC TECHNOLOGY CO., LTD., Zhangzhou Fujian 363000 (CN)
(72) Inventor: CHEN, Haifei, XIAMEN, 361101 (CN); HUANG, Jinlin, XIAMEN, 361101 (CN); CHEN, Tongyou, XIAMEN, 361101 (CN); XU, Yongzhi, XIAMEN, 361101 (CN); ZHAO, Chen, XIAMEN, 361101 (CN); CHEN, Jinchuan, XIAMEN, 361101 (CN); FENG, Lianxing, XIAMEN, 361101 (CN); YU, Xin, XIAMEN, 361101 (CN); LIU, Lin, XIAMEN, 361101 (CN); GUO, Mingshuai, XIAMEN, 361101 (CN); LYU, Jiwei, XIAMEN, 361101 (CN)
(74) Representative: Regimbeau

(57) **Abstract**

Embodiments of the present application provide a circuit topology and a power supply. The circuit topology includes at least one rectifier module and at least one charging and discharging module. An input end of the rectifier module is connected to an AC power supply, and an output end of the rectifier module is connected to a DC bus for rectifying the AC power supply to supply power to the DC bus. An input end of the charging and discharging module is connected to an energy storage power supply, and an output end of the charging and discharging module is connected to the DC bus for discharge of the energy storage power supply to the DC bus and/or charge of the energy storage power supply with electrical energy from the DC bus. The circuit topology further includes: one of the rectifier module and the charging and discharging module, as a target module, and a switch module. At least one of a sampling element or an inductive element is disposed in the target module, and the target module is connected to the switch module. When one of the switch module or the target module operates as a balance bridge arm, at least one of the sampling element or the inductive element is located on a connection line between a common point of the balance bridge arm and the neutral line, the sampling element is configured to sample an operating electrical parameter of the balance bridge arm, and the inductive element serves as a balance bridge inductor.

## Description

### TECHNICAL FIELD

The present application relates to, but is not limited to, the field of power supply technology, and in particular to a circuit topology and a power supply.

### BACKGROUND

An Uninterruptible Power Supply (UPS) is a kind of uninterruptible power supply that contains a battery. When an Alternating Current (AC) power supply is cut off, the battery discharges to supply power to the load. Since the battery does not have a neutral line, a balance bridge is generally required to avoid bias voltage between a positive bus and a negative bus.

In the related art, it is necessary to set an AC rectifier topology, a battery charging and discharging topology and a balance bridge topology in the UPS, and a number of the topologies is large. Furthermore, the AC rectifier topology is generally set with a current sampling element for sampling electrical parameters to control the rectifier circuit, and it is also necessary to set a current sampling element in the balance bridge to control the balance bridge, which results in a low utilization rate of the components.

### SUMMARY

In view of this, embodiments of the present application provide a circuit topology and a power supply, so as to solve the problem of the large number of topologies and the low utilization rate of components in the UPS in the related art.

The technical solution of the present application is implemented as follows.

In a first aspect, an embodiment of the present application provides a circuit topology, which includes at least one rectifier module and at least one charging and discharging module. An input end of the rectifier module is connected to an Alternating Current (AC) power supply, and an output end of the rectifier module is connected to a Direct Current (DC) bus for rectifying the AC power supply to supply power to the DC bus. An input end of the charging and discharging module is connected to an energy storage power supply, and an output end of the charging and discharging module is connected to the DC bus for discharge of the energy storage power supply to the DC bus and/or charge of the energy storage power supply with electrical energy from the DC bus. The DC bus includes a positive bus, a negative bus and a neutral line.

The circuit topology further includes: one of the rectifier module and the charging and discharging module, as a target module; and a switch module. At least one of a sampling element or an inductive element is disposed in the target module, and the target module is connected to the switch module. When one of the switch module or the target module operates as a balance bridge arm, at least one of the sampling element or the inductive element is located on a connection line between a common point of the balance bridge arm and the neutral line, the sampling element is configured to sample an operating electrical parameter of the balance bridge arm, and the inductive element serves as a balance bridge inductor. The balance bridge arm is configured to control voltage balance between the positive bus and the negative bus.

In some embodiments, the switch module may be connected between an input end of the target module and the neutral line, or between the input end of the target module and the DC bus.

When the AC power supply or the energy storage power supply supplies power to the DC bus through the target module, the switch module is controlled to be switched off; otherwise, the switch module and the target module are controlled such that one of the switch module or the target module operates as the balance bridge arm.

In some embodiments, when the target module is the rectifier module, the switch module may include a first switch, and the first switch is connected between the input end of the rectifier module and the neutral line.

When the AC power supply supplies power to the DC bus through the rectifier module, the first switch is controlled to be switched off; otherwise, the first switch is controlled to be switched on, and the rectifier module is controlled to operate as the balance bridge arm.

In some embodiments, when the target module is the rectifier module, the switch module may include a second switch and a third switch. The second switch is connected between the input end of the rectifier module and the positive bus, and the third switch is connected between the input end of the rectifier module and the negative bus.

When the AC power supply supplies power to the DC bus through the rectifier module, both the second switch and the third switch are controlled to be switched off; otherwise, the rectifier module is controlled to be in a non-rectifying state, and the second switch and the third switch are controlled to operate as the balance bridge arm.

In some embodiments, the rectifier module may include a first inductor, a vertical tube unit and a horizontal tube unit. Each of the vertical tube unit and the horizontal tube unit includes two respective switch components connected in series. The first inductor is connected between the input end of the rectifier module and a common point of the two switch components of the vertical tube unit. The vertical tube unit is connected between the positive bus and the negative bus, and the horizontal tube unit is connected between the common point of the two switch components of the vertical tube unit and the neutral line.

The rectifier module being controlled to be in the non-rectifying state specifically includes that the horizontal tube unit is controlled to be turned on.

In some embodiments, when the target module is the charging and discharging module, the switch module may include a single-pole double-throw fourth switch and a single-pole double-throw fifth switch. A common end of the fourth switch is connected to a positive electrode of the input end of the charging and discharging module, and a common end of the fifth switch is connected to a negative electrode of the input end of the charging and discharging module. A first end of the fourth switch is connected to a positive electrode of the energy storage power supply, and a first end of the fifth switch is connected to a negative electrode of the energy storage power supply. Both a second end of the fourth switch and a second end of the fifth switch are connected to the neutral line.

When the charging and discharging module charges or discharges the energy storage power supply, both the first end of the fourth switch and the first end of the fifth switch are controlled to be switched on. Otherwise, both the second end of the fourth switch and the second end of the fifth switch are controlled to be switched on, and the charging and discharging module is controlled to operate as the balance bridge arm.

In some embodiments, the charging and discharging module may include two inductors, and a first switch component, a second switch component and a third switch component that are connected in series. A free end of the first switch component and a free end of the third switch component are connected to the positive bus and the negative bus respectively as output ends of the charging and discharging module. Each of two ends of the second switch component forms a common point with a respective one of the first switch component and the third switch component, and each of the two ends of the second switch component is connected to a respective one of the two inductors to serve as the input end of the charging and discharging module.

The charging and discharging module being controlled to operate as the balance bridge arm specifically includes that the first switch component and the third switch component are controlled to operate as the balance bridge arm, and the second switch component is turned on such that the two common points form the common point of the balance bridge arm.

In some embodiments, when the target module is the charging and discharging module, the switch module may include a sixth switch, a seventh switch and an eighth switch. When the sixth switch is connected between a positive electrode of the input end of the charging and discharging module and the positive bus and the seventh switch is connected between a negative electrode of the input end of the charging and discharging module and the negative bus, the eighth switch is connected between the positive electrode of the input end of the charging and discharging module and the negative electrode of the input end of the charging and discharging module.

When the charging and discharging module charges or discharges the energy storage power supply, the sixth switch, the seventh switch and the eighth switch are controlled to be switched off. Otherwise, the charging and discharging module is controlled to be in a non-charging and non-discharging state, and the eighth switch is controlled to be switched on, such that the sixth switch and the seventh switch operate as the balance bridge arm, and a connection point of the positive electrode of the input end and the negative electrode of the input end of the charging and discharging module is called the common point of the balance bridge arm.

In some embodiments, the charging and discharging module may include a first buck bridge arm circuit and a second buck bridge arm circuit. Each of a first end of the first buck bridge arm circuit and a first end of the second buck bridge arm circuit is connected to a respective one of the positive electrode and the negative electrode of the input end of the charging and discharging module, each of a second end of the first buck bridge arm circuit and a third end of the second buck bridge arm circuit is connected to a respective one of the positive bus and the negative bus, and both a third end of the first buck bridge arm circuit and a second end of the second buck bridge arm circuit are connected to the neutral line.

The charging and discharging module being controlled to be in the non-charging and non-discharging state specifically includes that both of a switch component connected between a midpoint of the first buck bridge arm circuit and the neutral line, and a switch component connected between a midpoint of the second buck bridge arm circuit and the neutral line, are controlled to be turned on.

In some embodiments, when the target module is the charging and discharging module, the switch module may include a ninth switch, a tenth switch, an eleventh switch, a twelfth switch and a thirteenth switch, and the charging and discharging module may include a third buck bridge arm circuit and a fourth buck bridge arm circuit. A first end of the fourth buck bridge arm circuit forms a fourth end through the ninth switch, and a second end of the fourth buck bridge arm circuit forms a fifth end through the tenth switch. Each of a first end of the third buck bridge arm circuit and a fourth end of the fourth buck bridge arm circuit is connected to a respective one of a positive electrode and a negative electrode of the input end of the charging and discharging module. Each of a second end of the third buck bridge arm circuit and a third end of the fourth buck bridge arm circuit is connected to a respective one of the positive bus and the negative bus, and a third end of the third buck bridge arm circuit is connected to the neutral line. The first end of the fourth buck bridge arm circuit is connected to the neutral line through the eleventh switch, and the second end of the fourth buck bridge arm circuit is connected to the neutral line through the twelfth switch. A fifth end of the fourth buck bridge arm circuit is connected to one of the positive bus or the negative bus, and the fourth end and the third end are not connected to the positive bus or the negative bus simultaneously.

The input end of the rectifier module is further connected to one of a positive electrode or a negative electrode of the energy storage power supply through the thirteenth switch, and the input end of the rectifier module and the first end of the third buck bridge arm circuit are not connected to the positive electrode or the negative electrode of the energy storage power supply simultaneously.

When the charging and discharging module charges the energy storage power supply, the tenth switch, the eleventh switch and the thirteenth switch are controlled to be switched off, and the ninth switch and the twelfth switch are controlled to be switched on. The DC bus charges the energy storage power supply through the third buck bridge arm circuit and the fourth buck bridge arm circuit.

When the charging and discharging module discharges the energy storage power supply, the tenth switch, the eleventh switch and the thirteenth switch are controlled to be switched on, and the ninth switch and the twelfth switch are controlled to be switched off. The energy storage power supply discharges through the rectifier module and the third buck bridge arm circuit, and the fourth buck bridge arm circuit forms the balance bridge arm.

In some embodiments, each of the first buck bridge arm circuit, the second buck bridge arm circuit, the third buck bridge arm circuit and the fourth buck bridge arm circuit may include a respective inductor, and two respective switch components connected in series. For each of the first buck bridge arm circuit, the second buck bridge arm circuit, the third buck bridge arm circuit and the fourth buck bridge, the two switch components serve as a second end and a third end of the buck bridge arm circuit, a common point of the two switch components is connected to an end of the inductor, and another end of the inductor serves as a first end of the buck bridge arm circuit.

In some embodiments, the second switch, the third switch, the sixth switch and the seventh switch may be switching tubes.

In some embodiments, the sampling element may be a Hall element.

In some embodiments, the circuit topology may include three rectifier modules. Each of input ends of the three rectifier modules is connected to a respective one of three phases of the AC power supply, and output ends of the three rectifier modules are all connected to the DC bus. Input ends of two of the three rectifier circuits are further connected to a positive electrode and a negative electrode of the energy storage power supply through a fourteenth switch and a fifteenth switch respectively.

When the AC power supply supplies power, both the fourteenth switch and the fifteenth switch are controlled to be switched off. When the energy storage power supply supplies power, both the fourteenth switch and the fifteenth switch are controlled to be switched on, and the energy storage power supply supplies power to the positive bus and the negative bus through a first rectifier module and a second rectifier module.

In a second aspect, an embodiment of the present application provides a power supply, which includes the circuit topology provided in the first aspect of embodiments of the present application.

Embodiments of the present application provide a circuit topology and a power supply. The circuit topology includes at least one rectifier module and at least one charging and discharging module. An input end of the rectifier module is connected to an Alternating Current (AC) power supply, and an output end of the rectifier module is connected to a Direct Current (DC) bus for rectifying the AC power supply to supply power to the DC bus. An input end of the charging and discharging module is connected to an energy storage power supply, and an output end of the charging and discharging module is connected to the DC bus for discharge of the energy storage power supply to the DC bus and/or charge of the energy storage power supply with electrical energy from the DC bus. The DC bus includes a positive bus, a negative bus and a neutral line. The circuit topology further includes: one of the rectifier module and the charging and discharging module, as a target module; and a switch module. At least one of a sampling element or an inductive element is disposed in the target module, and the target module is connected to the switch module. When one of the switch module or the target module operates as the balance bridge arm, at least one of the sampling element or the inductive element is located on a connection line between a common point of the balance bridge arm and the neutral line, the sampling element is configured to sample an operating electrical parameter of the balance bridge arm, and the inductive element serves as a balance bridge inductor. The balance bridge arm is configured to control voltage balance between the positive bus and the negative bus. In the embodiments of the present application, by controlling one of the switch module, the rectifier module, or the charging and discharging module to operate as the balance bridge arm, and making the sampling element and/or the inductive element of the rectifier module or the charging and discharging module to be located on the connection line between the common point of the balance bridge arm and the neutral line, sharing of the sampling element of the target module (the rectifier module or the charging and discharging module) and the sampling element of the balance bridge arm is realized, and there is no need to further set a complete balance bridge topology independently, which reduces the number of topologies and improves the utilization rate of components.

It is to be understood that the above general description and the following detailed description are only exemplary and explanatory, and do not limit the technical solutions of the present application.

### BRIEF DESCRIPTION OF THE DRAWINGS

The drawings herein are incorporated into the specification and form a part of the specification, which illustrate embodiments in accordance with the present application and are used in combination with the specification to illustrate the technical solutions of the present application.
FIG. 1 is a first circuit structure diagram of a circuit topology provided by an embodiment of the present application.
FIG. 2 is a second circuit structure diagram of a circuit topology provided by an embodiment of the present application.
FIG. 3 is a third circuit structure diagram of a circuit topology provided by an embodiment of the present application.
FIG. 4 is a first circuit structure diagram of a rectifier module provided by an embodiment of the present application.
FIG. 5 is a fourth circuit structure diagram of a circuit topology provided by an embodiment of the present application.
FIG. 6 is a fifth circuit structure diagram of a circuit topology provided by an embodiment of the present application.
FIG. 7 is a circuit structure diagram of a charging and discharging module provided by an embodiment of the present application.
FIG. 8A is a sixth circuit structure diagram of a circuit topology provided by an embodiment of the present application.
FIG. 8B is a seventh circuit structure diagram of a circuit topology provided by an embodiment of the present application.
FIG. 9 is an eighth circuit structure diagram of a circuit topology provided by an embodiment of the present application.

### DETAILED DESCRIPTION

In order to make the purpose, technical solutions and advantages of the embodiments of the present application clearer, the specific technical solutions of the present application would be further described in detail below in combination with the drawings in the embodiments of the present application. The following embodiments are used to illustrate the present application, but are not intended to limit the scope of the present application.

Unless otherwise defined, all technical and scientific terms used in the present application have the same meanings as commonly understood by those skilled in the technical field of the present application. The terms used in the present application are only for the purpose of describing the embodiments of the present application and are not intended to limit the present application.

In the following description, terms such as "some embodiments", "the present embodiment", "embodiments of the present application" and the examples are involved, which describe a subset of all possible embodiments. However, it is to be understood that "some embodiments" may be the same subset or different subsets of all possible embodiments and may be combined with each other without conflict.

If description similar to "first/second" appears in the application document, the following illustration is added. In the following description, the term "first/second/third" involved is only used to differentiate similar objects, and does not represent a specific order of objects. It is to be understood that the term "first/second/third" may be interchanged in a particular order or sequence when permitted, such that the embodiments of the present application described herein may be implemented in an order other than that illustrated or described herein.

Implementations of the present application are described in detail below with reference to specific drawings.

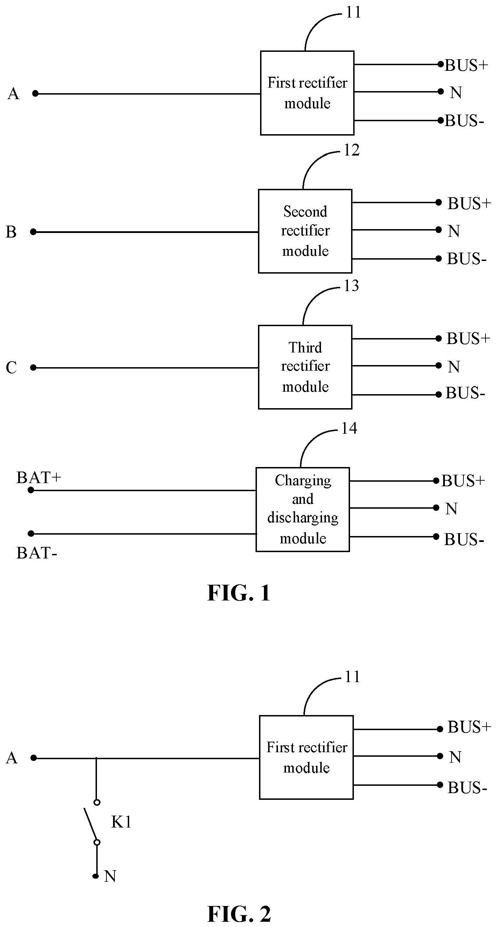

An embodiment of the present application provides a circuit topology. As shown in FIG. 1, the circuit topology includes at least one rectifier module and at least one charging and discharging module. FIG. 1 shows three rectifier modules (a first rectifier module 11, a second rectifier module 12 and a third rectifier module 13), and a charging and discharging module 14. An input end of the rectifier module is connected to an AC power supply (e.g., phases A, B or C) and an output end of the rectifier module is connected to a DC bus (e.g., BUS+, BUS- or N) for rectifying the AC power supply to supply power to the DC bus. An input end of the charging and discharging module 14 is connected to an energy storage power supply (e.g., BAT+ or BAT-), and an output end of the charging and discharging module 14 is connected to a DC bus (e.g., BUS+, BUS- or N) for discharge of the energy storage power supply to the DC bus and/or charge of the energy storage power supply with electrical energy from the DC bus. The DC bus includes a positive bus BUS+, a negative bus BUS- and a neutral line N.

It is to be noted that, the circuit topology in FIG. 1 includes a circuit topology of an AC boosting portion and a circuit topology of a battery charging and discharging portion of an Uninterruptible Power Supply (UPS). A conventional operating mode of the UPS is as follows. When the AC power supply supplies power, the AC power supply supplies power to the DC bus through the three rectifier modules. The DC bus is followed by an inverter circuit (which is not shown in the present application), and an electrical load is supplied with power through the inverter circuit. When the AC power supply is energized, if the energy storage power supply needs to be charged, the energy storage power supply (e.g., a battery, a lithium battery, a flywheel energy storage system, etc.) is further charged through the charging and discharging module. When the AC power supply is cut off, the energy storage power supply supplies power to the DC bus through the charging and discharging module, so as to ensure that the electrical load is uninterruptedly supplied with power. The specific control solution of the above control is the same as the conventional technology in the art, and is not specifically illustrated here.

The circuit topology further includes: one of the rectifier module and the charging and discharging module, as a target module; and a switch module. At least one of a sampling element or an inductive element is disposed in the target module, and the target module is connected to the switch module. When one of the switch module or the target module operates as a balance bridge arm, at least one of the sampling element or the inductive element is located on a connection line between a common point of the balance bridge arm and the neutral line. The sampling element is configured to sample an operating electrical parameter of the balance bridge arm. The inductive element serves as a balance bridge inductor. The balance bridge arm is configured to control voltage balance between the positive bus and the negative bus.

Here, the operating electrical parameter includes one of an operating voltage parameter or an operating current parameter, or the both. The sampling element may be a Hall element or other corresponding electrical parameter sampling elements. The target module may include an inductive element in addition to the sampling element. Both the inductive element and the sampling element are located on the connection line between the common point of the balance bridge arm and the neutral line, and the locations of the inductive element and the sampling element in the target module may be interchanged. Exemplarily, when one of the switch module or the target module operates as the balance bridge arm, at least one of the operating voltage parameter or the operating current parameter of the balance bridge arm is sampled by the sampling element, and calculation is made according to the sampled electrical parameter of the balance bridge arm to control the balance bridge arm, such that the positive and negative buses are in a balance state.

It is to be noted that when the target module is the charging and discharging module, the charging and discharging module does not operate in a conventional mode (i.e., the charging and discharging module does not charge the energy storage power supply or discharge the energy storage power supply). AC current output from the AC power supply is rectified by the rectifier module to obtain DC current, and the DC current is supplied to the DC bus.

When the target module is the rectifier module, the rectifier module does not operate in a conventional mode (i.e., the rectifier module does not supply power to the DC bus). Electrical energy output by the energy storage power supply (e.g., a battery) passes through the charging and discharging module and then charges the DC bus.

As is well known in the art, the balance bridge circuit is connected among the positive bus, the negative bus and the neutral line. A commonly used balance bridge topology includes two switch components connected in series to form the balance bridge arm, and a balance bridge inductor connected to a midpoint of the balance bridge arm. Each of two free ends of the balance bridge arm is connected to a respective one of the positive bus and the negative bus. A free end of the balance bridge inductor is connected to the neutral line, and the switch components of the balance bridge arm are controlled by sampling the current of the balance bridge inductor. In the embodiments of the present application, by controlling one of the switch module, the rectifier module, or the charging and discharging module to operate as the balance bridge arm, and making the sampling element and/or the inductive element of the rectifier module or the charging and discharging module to be located on the connection line between the common point of the balance bridge arm and the neutral line, sharing of the sampling element of the target module (the rectifier module or the charging and discharging module) and the sampling element of the balance bridge arm is realized, and there is no need to further set a complete balance bridge topology independently, which reduces the number of topologies and improves the utilization rate of components.

In an embodiment, the switch module is connected between an input end of the target module and the neutral line, or between the input end of the target module and the DC bus. When the AC power supply or the energy storage power supply supplies power to the DC bus through the target module, the switch module is controlled to be switched off. Otherwise, the switch module and the target module are controlled such that one of the switch module or the target module operates as the balance bridge arm.

Exemplarily, when the switch module is controlled to be switched off, the target module operates in a conventional mode. The AC power supply supplies power to the positive bus and the negative bus through the rectifier module, or the energy storage power supply supplies power to the positive bus and the negative bus through the charging and discharging module. In such case, the switch module or the target module does not serve as the balance bridge arm.

When the switch module is controlled to be switched on, the target module forms the balance bridge circuit together with the sampling element and the inductive element to balance the voltage between the positive bus and the negative bus.

In the embodiments of the present application, two circuit topologies (i.e., the circuit topology that one of the rectifier module or the charging and discharging module, which is the target module, operates as the balance bridge arm, and the circuit topology that one of the rectifier module or the charging and discharging module does not operate as the balance bridge arm) can be realized by controlling the operating state of the switch module. On the basis of sharing the sampling element and/or the inductive element of the target module, the bridge arm topology of the rectifier module or the charging and discharging module is further shared, which reduces the number of topologies and further improves the utilization rate of components.

In some embodiments, when the target module is the rectifier module, the switch module includes a first switch, and the first switch is connected between the input end of the rectifier module and the neutral line. When the AC power supply supplies power to the DC bus through the rectifier module, the first switch is controlled to be switched off. Otherwise, the first switch is controlled to be switched on, and the rectifier module is controlled to operate as the balance bridge arm.

Here, the rectifier module may be any one of the rectifier modules in FIG. 1. In the following, the first rectifier module 11 in FIG. 1 is illustrated as an example.

Exemplarily, as shown in FIG. 2, the circuit topology includes a first rectifier module 11 and a first switch K1. A sampling element and an inductor are disposed in the first rectifier module 11, and the sampling element is configured to sample a voltage parameter or a current parameter of the circuit.

An input end of the first rectifier module 11 is connected to a first end of the first switch K1 and a phase (e.g., phase A) of the AC power supply respectively. A positive DC output end of the first rectifier module 11 is connected to the positive bus BUS+, a negative DC output end of the first rectifier module 11 is connected to the negative bus BUS-, and a neutral line end of the first rectifier module 11 is connected to the N line.

A second end of the first switch K1 is connected to the N line.

When the AC power supply supplies power to the DC bus, the first switch K1 is controlled to be switched off, so as to supply power to the positive bus BUS+ and the negative bus BUS- after the voltage or current output by the AC power supply is rectified by the first rectifier module 11. In such case, the first rectifier module 11 is used for AC rectification.

When the AC power supply does not supply power to the DC bus, the first switch K1 is controlled to be switched on, so as to form the balance bridge arm by the first rectifier module 11 to balance the voltage or current between the positive bus BUS+ and the negative bus BUS-. The sampling element is connected in series between the midpoint of the balance bridge arm and the N line for sampling the voltage parameter or the current parameter to control to balance the voltage or current between the positive bus BUS+ and the negative bus BUS-.

In the embodiments of the present application, by controlling the operating state of the first switch, the first rectifier module is used for AC rectification or the balance bridge circuit, so that the AC rectifier topology and the balance bridge topology are combined into one, and there is no need to provide two rectifier modules for the AC rectification and the balance bridge circuit respectively. The two topologies share some components (e.g., the sampling element, the inductive element and the switch component constituting the balance bridge arm), which reduces the number of components, improves the utilization rate of components and reduces the cost of the circuit.

In some embodiments, similarly, the target module is the rectifier module. The switch module includes a second switch and a third switch. The second switch is connected between the input end of the rectifier module and the positive bus, and the third switch is connected between the input end of the rectifier module and the negative bus. When the AC power supply supplies power to the DC bus through the rectifier module, both the second switch and the third switch are controlled to be switched off. Otherwise, the rectifier module is controlled to be in a non-rectifying state, and the second switch and the third switch are controlled to operate as the balance bridge arm.

Here, the rectifier module may be any one of the rectifier modules in FIG. 1. In the following, the first rectifier module 11 in FIG. 1 is illustrated as an example.

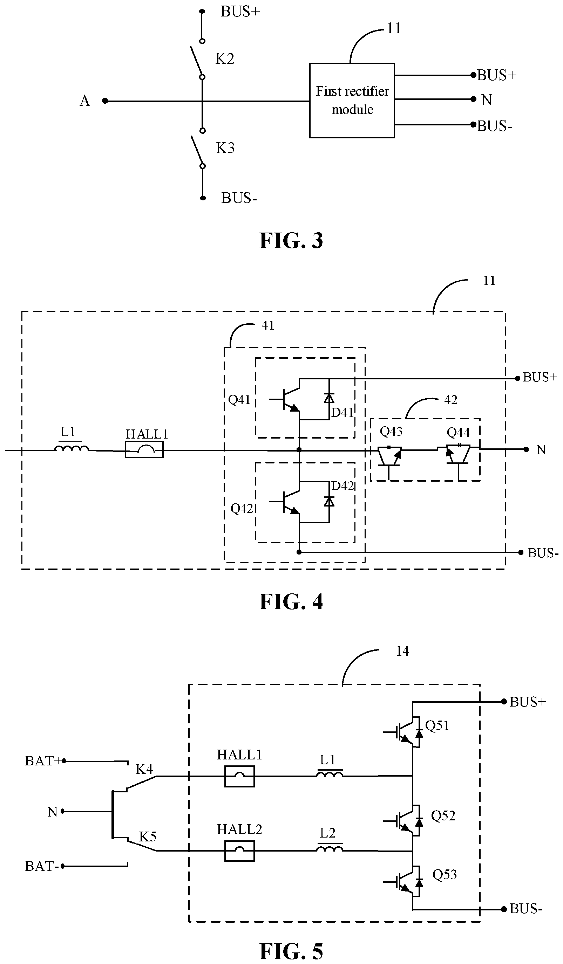

Exemplarily, as shown in FIG. 3, the circuit topology includes a first rectifier module 11, a second switch K2 and a third switch K3. A sampling element and an inductive element are disposed in the first rectifier module 11, and the sampling element is configured to sample a voltage parameter or a current parameter of the circuit.

The input end of the first rectifier module 11 is connected to a second end of the second switch K2, a first end of the third switch K3 and the phase A of the AC power supply respectively. The positive output end of the first rectifier module 11 is connected to the positive bus BUS+. The negative output end of the first rectifier module 11 is connected to the negative bus BUS-. The neutral line end of the first rectifier module 11 is connected to the N line.

A first end of the second switch K2 is connected to the positive bus BUS+, and a second end of the third switch K3 is connected to the negative bus BUS-.

When the AC power supply supplies power to the DC bus, the second switch K2 and the third switch K3 are controlled to be switched off, so as to supply power to the positive bus BUS+ and the negative bus BUS- after the voltage or current output by the phase A of the AC power supply is rectified by the first rectifier module 11. In such case, the first rectifier module 11 is used for AC rectification.

When the AC power supply does not supply power to the DC bus, the second switch K2 and the third switch K3 are controlled to be switched on. Both the second end of the second switch K2 and the first end of the third switch K3 are connected to the neutral line end of the first rectifier module 11, so as to form the balance bridge arm by the second switch K2 and the third switch K3. In such case, the rectifier module is in a non-rectifying state, and the sampling element and the inductive element are connected in series between the neutral line end of the first rectifier module 11 and the intersection of the second switch K2 and the third switch K3.

It is to be noted that both the second switch and the third switch are switching tubes. The switching tube may be a triode, a Metal-Oxide-Semiconductor Field-Effect Transistor (MOSFET), or an Insulated Gate Bipolar Transistor (IGBT).

In the embodiments of the present application, by controlling the operating states of the second switch and the third switch, the first rectifier module is used for AC rectification or the second switch and the third switch form the balance bridge arm, so that the AC rectifier topology and the balance bridge circuit topology are combined into one, and there is no need to provide two rectifier modules for the AC rectification and the balance bridge circuit respectively. The two topologies share some components (e.g., the sampling element and the inductor), which reduces the number of components, improves the utilization rate of components and reduces the cost of the circuit.

In some embodiments, the rectifier module includes a first inductor, a vertical tube unit and a horizontal tube unit. Each of the vertical tube unit and the horizontal tube unit includes two respective switch components connected in series. The first inductor is connected between the input end of the rectifier module and a common point of the two switch components of the vertical tube unit, the vertical tube unit is connected between the positive bus and the negative bus, and the horizontal tube unit is connected between the common point of the two switch components of the vertical tube unit and the neutral line. The rectifier module being controlled to be in the non-rectifying state specifically includes that the horizontal tube unit is controlled to be turned on.

Here, the rectifier module may be any one of the rectifier modules in FIG. 1. In the following, the first rectifier module 11 in FIG. 1 is illustrated as an example.

Exemplarily, as shown in FIG. 4, the first rectifier module 11 is a T-type circuit including a first inductor L1, a vertical tube unit 41 and a horizontal tube unit 42. The vertical tube unit 41 includes two switch components Q41 and Q42 connected in series, and the horizontal tube unit 42 includes two switch components Q43 and Q44 connected in series. Each of the switch components Q41 to Q44 may be a switch component with a self-contained body diode inside, or may be a switch component with a diode connected in parallel outside, which would not be limited herein.

A first end of the first inductor L1 is connected to the input end of the first rectifier module 11, and a second end of the first inductor L1 is connected to a first end of a sampling element HALL 1.

A second end of the sampling element HALL1 is connected to a common point of the switch components Q41 and Q42.

A first end of the switch component Q41 is connected to the positive bus BUS+, and a second end of the switch component Q41 forms a common point with the second end of the sampling element HALL 1 and a first end of the switch component Q42.

A second end of the switch component Q42 is connected to the negative bus BUS-.

A first end of the switch component Q43 is connected to the common point formed by the second end of the switch component Q41 and the first end of the switch component Q42, and a second end of the switch component Q43 is connected to a first end of the switch component Q44.

A second end of the switch component Q44 is connected to the neutral line N.

When the AC power supply supplies power to the DC bus, during the positive half cycle of the AC, the driving of the switch component Q41 is controlled to be turned on, so as to output the voltage or current, which is output by the phase A of the AC power supply, to the positive bus BUS+ through the switch component Q41 to supply power to the positive bus BUS+. During the negative half cycle of the AC, the driving of the switch component Q42 is controlled to be turned on, so as to output the voltage or current, which is output by the phase A of the AC power supply, to the negative bus BUS- through the switch component Q42 to supply power to the negative bus BUS-.

It is to be noted that the first rectifier module being in a non-rectifying state indicates that the AC power supply does not supply power to the DC bus, the first inductor L1 is in an operating state, that both the switch component Q43 and the switch component Q44 are in a conduction state, and that both the switch component Q41 and the switch component Q42 are in a cut-off state.

As shown in FIG. 4, the sampling element HALL 1 is located on the right side of the first inductor L1 and is connected in series with the first inductor L1, which ensures that when a balance bridge topology is formed, the sampling element may be connected in series between the N line and the midpoint of the balance bridge arm to sample the current in the pathway from the midpoint of the balance bridge arm to the N line, so as to balance the voltage between the positive bus BUS+ and the negative bus BUS-. The back-and-forth relationship between the first inductor L1 and the sampling element HALL1 is not limited herein.

In other embodiments, the first rectifier module 11 may be a Vienna circuit. Specifically, the aforementioned two switch components Q41 and Q42 constituting the vertical tube unit shown in FIG. 4 are replaced with two unidirectional conducting diodes, which would not be repeated herein.

In some embodiments, when the target module is the charging and discharging module, the switch module includes a single-pole double-throw fourth switch and a single-pole double-throw fifth switch. A common end of the fourth switch and a common end of the fifth switch are connected to a positive electrode and a negative electrode of the input end of the charging and discharging module respectively. A first end of the fourth switch and a first end of the fifth switch are connected to a positive electrode and a negative electrode of the energy storage power supply respectively. Both a second end of the fourth switch and a second end of the fifth switch are connected to the neutral line. When the charging and discharging module charges or discharges the energy storage power supply, both the first end of the fourth switch and the first end of the fifth switch are controlled to be switched on; otherwise, both the second end of the fourth switch and the second end of the fifth switch are controlled to be switched on, and the charging and discharging module is controlled to operate as the balance bridge arm.

Here, the charging and discharging module may be the charging and discharging module 14 in FIG. 1. In the following, the charging and discharging module 14 in FIG. 1 is illustrated as an example.

Exemplarily, as shown in FIG. 5, the switch module includes a single-pole double-throw fourth switch K4 and a single-pole double-throw fifth switch K5. A first end of the fourth switch K4 is connected to a positive electrode BAT+ of the energy storage power supply, a second end of the fourth switch K4 is connected to the neutral line N, and a common end of the fourth switch K4 is connected to a positive electrode of the input end of the charging and discharging module 14.

A first end of the fifth switch K5 is connected to a negative electrode BAT- of the energy storage power supply. A second end of the fifth switch K5 is connected to the neutral line N. A common end of the fifth switch K5 is connected to a negative electrode of the input end of the charging and discharging module 14.

When the charging and discharging module 14 charges the energy storage power supply, both the first end of the fourth switch K4 and the first end of the fifth switch K5 are controlled to be switched on, such that the fourth switch K4 is connected to the positive electrode BAT+ of the energy storage power supply and the fifth switch K5 is connected to the negative electrode BAT- of the energy storage power supply, so as to output electrical energy, which is output by the positive bus BUS+ and the negative bus BUS-, to the positive electrode BAT+ and the negative electrode BAT- of the energy storage power supply through the charging and discharging module 14, thereby charging the energy storage power supply.

When the charging and discharging module 14 discharges the energy storage power supply, both the first end of the fourth switch K4 and the first end of the fifth switch K5 are controlled to be switched on, such that the fourth switch K4 is connected to the positive electrode BAT+ of the energy storage power supply and the fifth switch K5 is connected to the negative electrode BAT- of the energy storage power supply, so as to output electrical energy, which is output by the positive electrode BAT+ of the energy storage power supply and the negative electrode BAT- of the energy storage power supply, to the positive bus BUS+ and the negative bus BUS- through the charging and discharging module 14, thereby supplying power to the DC bus.

According to demand for charge or discharge, those skilled in the art may realize independent charge or discharge of the positive energy storage power supply (BAT+ and N) or the negative energy storage power supply (BAT- and N) by controlling K4 and K5, which would not be repeated herein.

When the charging and discharging module does not charge or discharge the energy storage power supply, the second end of the fourth switch K4 and the second end of the fifth switch K5 are controlled to be switched on, and both the fourth switch K4 and the fifth switch K5 are connected to the neutral line N, so that the charging and discharging module 41 operates as the balance bridge arm.

As shown in FIG. 5, the sampling element HALL1 is located on the left side of the first inductor L1 and is connected in series with the first inductor L1, which ensures that when the charging and discharging module forms a balance bridge topology, the sampling element HALL 1 may be connected in series between the N line and the midpoint of the balance bridge arm to sample the voltage or current in the pathway from the midpoint of the balance bridge arm to the N line, thereby balancing the voltage between the positive bus BUS+ and the negative bus BUS-. The back-and-forth relationship between the first inductor L1 and the sampling element HALL1 is not limited herein. In the embodiments of the present application, in one aspect, by simultaneously controlling the fourth switch and the fifth switch to be connected to the positive electrode and the negative electrode of the energy storage power supply respectively, the charging and discharging module may charge or discharge the energy storage power supply. In another aspect, by controlling both the fourth switch and the fifth switch to be simultaneously connected to the N line, the charging and discharging module is controlled to operate as the balance bridge arm. In yet another aspect, the charging and discharging topology of the energy storage power supply and the balance bridge topology are combined into one, and there is no need to provide two charging and discharging modules for charge and discharge of the energy storage power supply and the balance bridge arm respectively, which reduces the number of topologies and greatly reduces the complexity of the circuit. In addition, the two topologies share some components (e.g., the sampling element and the inductor), which reduces the number of components, improves the utilization rate of components and reduces the cost of the circuit.

In some embodiments, the charging and discharging module may include two inductors, and a first switch component, a second switch component and a third switch component that are connected in series. A free end of the first switch component and a free end of the third switch component are connected to the positive bus and the negative bus respectively as output ends of the charging and discharging module. Each of two ends of the second switch component forms a common point with a respective one of the first switch component and the third switch component, and each of the two ends of the second switch component is connected to a respective one of the two inductors to serve as the input end of the charging and discharging module. The charging and discharging module being controlled to operate as the balance bridge arm specifically includes that the first switch component and the third switch component are controlled to operate as the balance bridge arm, and the second switch component is turned on such that the two common points form the common point of the balance bridge arm.

Here, the charging and discharging module may be the charging and discharging module 14 in FIG. 1. In the following, the charging and discharging module 14 in FIG. 1 is illustrated as an example.

Exemplarily, as shown in FIG. 5, the charging and discharging module 14 includes two inductors (L1 and L2) and three switch components connected in series (Q51 to Q53), i.e., a first switch component Q51, a second switch component Q52 and a third switch component Q53. The three switch components have the same circuit structure.

A free end of the first switch component Q51 is connected to the positive bus BUS+ as an output end of the charging and discharging module 14. A first end of the first switch component Q51 and a first end of the second switch component Q52 form a first common point.

A second end of the second switch component Q52 and a first end of the third switch component Q53 form a second common point.

A free end of the third switch component Q53 is connected to the negative bus BUS- as the output end of the charging and discharging module 14.

A left end of the first common point is sequentially connected in series with the first inductor L1 and the first sampling element HALL1, and then serves as the positive electrode of the input end of the charging and discharging module 14.

A left end of the second common point is sequentially connected in series with the second inductor L2 and the second sampling element HALL2, and then serves as the negative electrode of the input end of the charging and discharging module 14.

When the charging and discharging module does not charge or discharge the energy storage power supply, the second end of the fourth switch K4 and the second end of the fifth switch K5 are controlled to be switched on, such that both the fourth switch K4 and the fifth switch K5 are connected to the neutral line N. Furthermore, the first switch component Q51, the second switch component Q52 and the third switch component Q53 are controlled to be turned on, such that the charging and discharging module 41 operates as the balance bridge arm. The first common point of the first switch component Q51 and the second switch component Q52 and the second common point of the second switch component Q52 and the third switch component Q53 serve as two common points of the balance bridge arm.

As shown in FIG. 5, the first sampling element HALL1 is located on the left side of the first inductor L1 and is connected in series with the first inductor L1, which ensures that when the charging and discharging module forms a balance bridge topology, the first sampling element HALL1 may be connected in series between the N line and one of the two common points of the balance bridge arm to sample the voltage or current in the pathway from the common point of the balance bridge arm to the N line, so that the voltage between the positive bus BUS+ and the negative bus BUS- can be balanced. The back-and-forth relationship between the first inductor L1 and the first sampling element HALL1 is not limited herein.

The second sampling element HALL2 is located on the left side of the second inductor L2 and is connected in series with the second inductor L2, which ensures that when the charging and discharging module forms the balance bridge topology, the second sampling element HALL2 may be connected in series between the N line and another one of the two common points of the balance bridge arm to sample the voltage or current in the pathway from the common point of the balance bridge arm to the N line, so that the voltage between the positive bus BUS+ and the negative bus BUS- can be balanced. The back-and-forth relationship between the second inductor L2 and the second sampling element HALL2 is not limited herein.

In the embodiments of the present application, by means of the two inductors and two sampling elements in the charging and discharging module, both the fourth switch and the fifth switch are simultaneously controlled to be connected to the neutral line N, and all of the first switch component, the second switch component and the third switch component are controlled to be turned on, such that the charging and discharging module operates as the balance bridge arm. In this way, there is no need to provide two charging and discharging modules each of which is connected to a respective inductor and a respective sampling element, which reduces the number of components, improves the utilization rate of components and reduces the cost of the circuit.

In some embodiments, similarly, when the target module is the charging and discharging module, the switch module includes a sixth switch to an eighth switch. When the sixth switch is connected between a positive electrode of the input end of the charging and discharging module and the positive bus, and the seventh switch is connected between a negative electrode of the input end of the charging and discharging module and the negative bus, the eighth switch is connected between the positive electrode of the input end of the charging and discharging module and the negative electrode of the input end of the charging and discharging module. When the charging and discharging module charges or discharges the energy storage power supply, the sixth switch, the seventh switch and the eighth switch are controlled to be switched off. Otherwise, the charging and discharging module is controlled to be in a non-charging and non-discharging state, and the eighth switch is controlled to be switched on, such that the sixth switch and the seventh switch operate as the balance bridge arm, and a connection point of the positive electrode of the input end and the negative electrode of the input end of the charging and discharging module is called the common point of the balance bridge arm.

Here, the charging and discharging module may be the charging and discharging module 14 in FIG. 1. In the following, the charging and discharging module 14 in FIG. 1 is illustrated as an example.

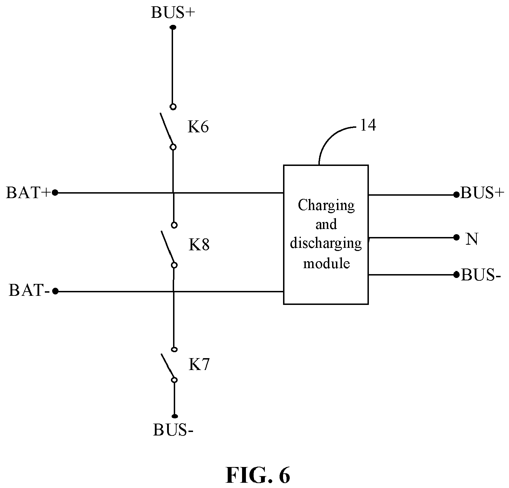

Exemplarily, as shown in FIG. 6, the switch module includes a sixth switch K6, a seventh switch K7 and an eighth switch K8.

The positive electrode of the input end of the charging and discharging module 14 is connected to a second end of the sixth switch K6, a first end of the eighth switch K8 and the positive electrode BAT+ of the energy storage power supply respectively. The negative electrode of the input end of the charging and discharging module 14 is connected to a first end of the seventh switch K7, a second end of the eighth switch K8 and the negative electrode BAT- of the energy storage power supply respectively. A positive output end of the charging and discharging module 14 is connected to the positive bus BUS+. A negative output end of the charging and discharging module 14 is connected to the negative bus BUS-. A neutral line end of the charging and discharging module 14 is connected to the N line.

A first end of the sixth switch K6 is connected to the positive bus BUS+.

A second end of the seventh switch K7 is connected to the negative bus BUS-.

The second end of the sixth switch K6, the positive electrode of the input end of the charging and discharging module 14 and the first end of the eighth switch K8 form a first common point.

The first end of the seventh switch K7, the negative electrode of the input end of the charging and discharging module 14 and the second end of the eighth switch K8 form a second common point.

When the charging and discharging module 14 charges the energy storage power supply, all of the sixth switch K6, the seventh switch K7 and the eighth switch K8 are controlled to be switched off, so that the electrical energy, which is output by the positive bus BUS+ and the negative bus BUS-, is output to the positive electrode BAT+ and the negative electrode BAT- of the energy storage power supply through the charging and discharging module 14, thereby charging the energy storage power supply.

When the charging and discharging module 14 discharges the energy storage power supply, all of the sixth switch K6, the seventh switch K7 and the eighth switch K8 are controlled to be switched off, so that the electrical energy, which is output by the positive electrode BAT+ and the negative electrode BAT- of the energy storage power supply, is output to the positive bus BUS+ and the negative bus BUS- through the charging and discharging module 14, thereby supplying power to the DC bus.

When the charging and discharging module does not charge or discharge the energy storage power supply, all of the sixth switch K6, the seventh switch K7 and the eighth switch K8 are controlled to be switched on, such that the sixth switch K6, the seventh switch K7 and the eighth switch K8 are connected, and the sixth switch K6 and the seventh switch K7 operate as the balance bridge arm. The first common point, which is formed by the sixth switch K6, the eighth switch K8 and the positive electrode of the input end of the charging and discharging module 14, serves as a first common point of the balance bridge arm, and the second common point, which is formed by the seventh switch K7, the eighth switch K8 and the negative electrode of the input end of the charging and discharging module 14, serves as a second common point of the balance bridge arm. The first common point and the second common point further form a unified common point through the switched-on eighth switch K8, and the unified common point is further connected to the neutral line N through the charging and discharging module.

It is to be noted that both the sixth switch and the seventh switch are switching tubes. The switching tube may be a triode, a Metal-Oxide-Semiconductor Field-Effect Transistor (MOSFET), or an Insulated Gate Bipolar Transistor (IGBT).

The charging and discharging module 14 includes an inductor and a sampling element. The inductor and the sampling element are connected in series, which ensures that when the sixth switch K6 and the seventh switch K7 operate as the balance bridge arm, the sampling element may be connected in series between the N line and the common point of the balance bridge arm to sample the voltage or current in the pathway from the common point of the balance bridge arm to the N line, so that the voltage or current between the positive bus BUS+ and the negative bus BUS- can be balanced. The back-and-forth relationship between the inductor and the sampling element is not limited herein.

In the embodiments of the present application, in one aspect, by controlling all of the sixth switch, the seventh switch K7 and the eighth switch to be switched off, the charging and discharging module may charge or discharge the energy storage power supply. In another aspect, by controlling all of the sixth switch, the seventh switch and the eighth switch to be switched on, the sixth switch and the seventh switch may operate as the balance bridge arm. In yet another aspect, by combining the charging and discharging topology of the energy storage power supply and the balance bridge topology into one, there is no need to provide two charging and discharging modules for charge and discharge of the energy storage power supply and the balance bridge arm respectively, which reduces the number of topologies and greatly reduces the complexity of the circuit. In addition, the two topologies share some components (e.g., the sampling element and the inductor), which reduces the number of components, improves the utilization rate of components and reduces the cost of the circuit.

In some embodiments, the charging and discharging module includes a first buck bridge arm circuit and a second buck bridge arm circuit. Each of a first end of the first buck bridge arm circuit and a first end of the second buck bridge arm circuit is connected to a respective one of the positive electrode and the negative electrode of the input end of the charging and discharging module. Each of a second end of the first buck bridge arm circuit and a third end of the second buck bridge arm circuit is connected to a respective one of the positive bus and the negative bus. Both a third end of the first buck bridge arm circuit and a second end of the second buck bridge arm circuit are connected to the neutral line.

The charging and discharging module being controlled to be in the non-charging and non-discharging state specifically includes that both of a switch component connected between a midpoint of the first buck bridge arm circuit and the neutral line, and a switch component connected between a midpoint of the second buck bridge arm circuit and the neutral line, are controlled to be turned on.

Here, the charging and discharging module may be the charging and discharging module 14 in FIG. 1. In the following, the charging and discharging module 14 in FIG. 1 is illustrated as an example.

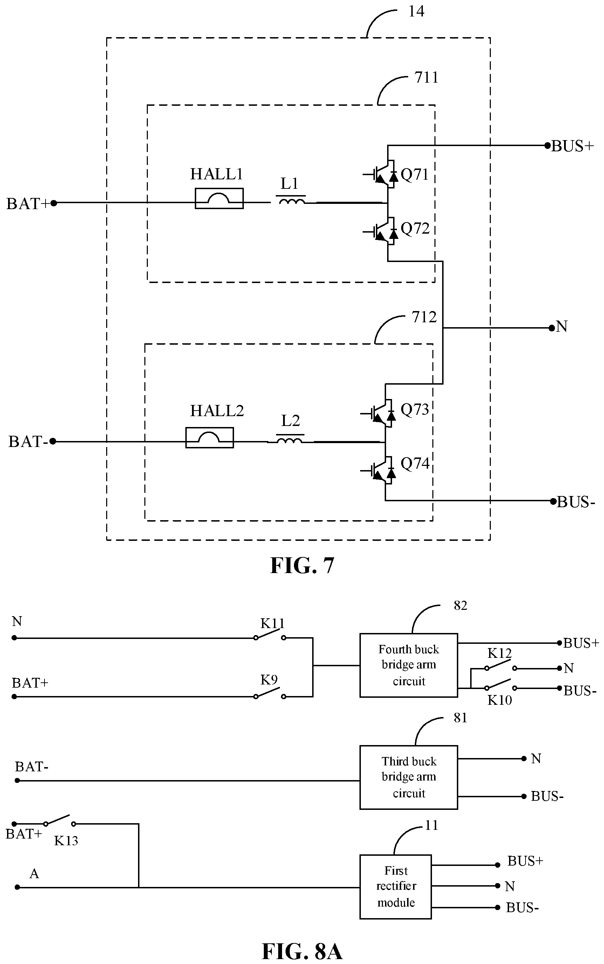

Exemplarily, as shown in FIG. 7, the charging and discharging module 14 includes a first buck bridge arm circuit 711 and a second buck bridge arm circuit 712, and the first buck bridge arm circuit 711 and the second buck bridge arm circuit 712 have the same structure.

The positive electrode of the input end of the charging and discharging module 14 is connected to the positive electrode BAT+ of the energy storage power supply. The negative electrode of the input end of the charging and discharging module 14 is connected to the negative electrode BAT- of the energy storage power supply. The positive output end of the charging and discharging module 14 is connected to the positive bus BUS+. The negative output end of the charging and discharging module 14 is connected to the negative bus BUS-. The neutral line end of the charging and discharging module 14 is connected to the N line.

A first end of the first buck bridge arm circuit 711 is connected to the positive electrode BAT+ of the input end of the charging and discharging module 14. A second end of the first buck bridge arm circuit 711 is connected to the positive bus BUS+. A third end of the first buck bridge arm circuit 711 is connected to the neutral line N.

A first end of the second buck bridge arm circuit 712 is connected to the negative electrode BAT- of the input end of the charging and discharging module 14. A second end of the second buck bridge arm circuit 712 is connected to the neutral line N. A third end of the second buck bridge arm circuit 712 is connected to the negative bus BUS-.

In the embodiment, the charging and discharging module being controlled to be in the non-charging and non-discharging state specifically includes that both of a switch component connected between a midpoint of the first buck bridge arm circuit and the neutral line, and a switch component connected between a midpoint of the second buck bridge arm circuit and the neutral line (i.e., Q72 and Q73 in FIG. 7), are controlled to be turned on.

It is to be noted that each of the number of inductors and the number of sampling elements may be two, and each of the first buck bridge arm circuit 711 and the second buck bridge arm circuit 712 may include a respective inductor and a respective sampling element. As shown in FIG. 7, the first sampling element (HALL1) is disposed on a pathway between the second end of the first buck bridge arm circuit 711 and the third end of the first buck bridge arm circuit 711. The second sampling element (HALL2) is disposed on a pathway between the first end of the second buck bridge arm circuit 712 and the second end of the second buck bridge arm circuit 712.

In the embodiments of the present application, not only the sampling element is shared, but also the inductor is shared. Since an inductor generally has a large size, the embodiments of the present application not only improve the utilization rate of components, but also reduce the size of the circuit.

In some embodiments, when the target module is the charging and discharging module, the switch module includes a ninth switch, a tenth switch, an eleventh switch, a twelfth switch and a thirteenth switch, and the charging and discharging module includes a third buck bridge arm circuit and a fourth buck bridge arm circuit. A first end of the fourth buck bridge arm circuit forms a fourth end through the ninth switch, and a second end of the fourth buck bridge arm circuit forms a fifth end through the tenth switch. Each of a first end of the third buck bridge arm circuit and a fourth end of the fourth buck bridge arm circuit is connected to a respective one of a positive electrode and a negative electrode of the input end of the charging and discharging module. Each of a second end of the third buck bridge arm circuit and a third end of the fourth buck bridge arm circuit is connected to a respective one of the positive bus and the negative bus. A third end of the third buck bridge arm circuit is connected to the neutral line. The first end of the fourth buck bridge arm circuit is connected to the neutral line through the eleventh switch, and the second end of the fourth buck bridge arm circuit is connected to the neutral line through the twelfth switch. A fifth end of the fourth buck bridge arm circuit is connected to one of the positive bus or the negative bus. The fourth end and the third end are not connected to the positive bus or the negative bus simultaneously.

The input end of the rectifier module is further connected to one of a positive electrode or a negative electrode of the energy storage power supply through the thirteenth switch, and the input end of the rectifier module and the first end of the third buck bridge arm circuit are not connected to the positive electrode or the negative electrode of the energy storage power supply simultaneously.

When the charging and discharging module charges the energy storage power supply, the tenth switch, the eleventh switch and the thirteenth switch are controlled to be switched off, and the ninth switch and the twelfth switch are controlled to be switched on. The DC bus charges the energy storage power supply through the third buck bridge arm circuit and the fourth buck bridge arm circuit.

When the charging and discharging module discharges the energy storage power supply, the tenth switch, the eleventh switch and the thirteenth switch are controlled to be switched on, and the ninth switch and the twelfth switch are controlled to be switched off. The energy storage power supply discharges through the rectifier module and the third buck bridge arm circuit, and the fourth buck bridge arm circuit forms the balance bridge arm.

Here, the charging and discharging module may be the charging and discharging module 14 in FIG. 1. In the following, the charging and discharging module 14 in FIG. 1 is illustrated as an example.

Exemplarily, as shown in FIG. 8A, the switch module includes a ninth switch K9, a tenth switch K10, an eleventh switch K11, a twelfth switch K12 and a thirteenth switch K13. The charging and discharging module 14 includes a third buck bridge arm circuit 81 and a fourth buck bridge arm circuit 82.

A first end of the fourth buck bridge arm circuit 82 forms a fourth end through the ninth switch K9, and a second end of the fourth buck bridge arm circuit 82 forms a fifth end through the tenth switch K10. A fourth end of the fourth buck bridge arm circuit 82 is connected to the positive electrode BAT+ of the input end of the charging and discharging module. A fifth end of the fourth buck bridge arm circuit 82 is connected to the negative bus BUS-. The first end of the fourth buck bridge arm circuit 82 is connected to the neutral line N through the eleventh switch K11, and the second end of the fourth buck bridge arm circuit 82 is connected to the neutral line N through the twelfth switch K12.

A first end of the third buck bridge arm circuit 81 is connected to the negative electrode BAT- of the input end of the charging and discharging module. A second end of the third buck bridge arm circuit 81 is connected to the negative bus BUS-, and a third end of the third buck bridge arm circuit 81 is connected to the neutral line N.

The input end of the first rectifier module 11 is further connected to the positive electrode BAT+ of the energy storage power supply through the thirteenth switch K13.

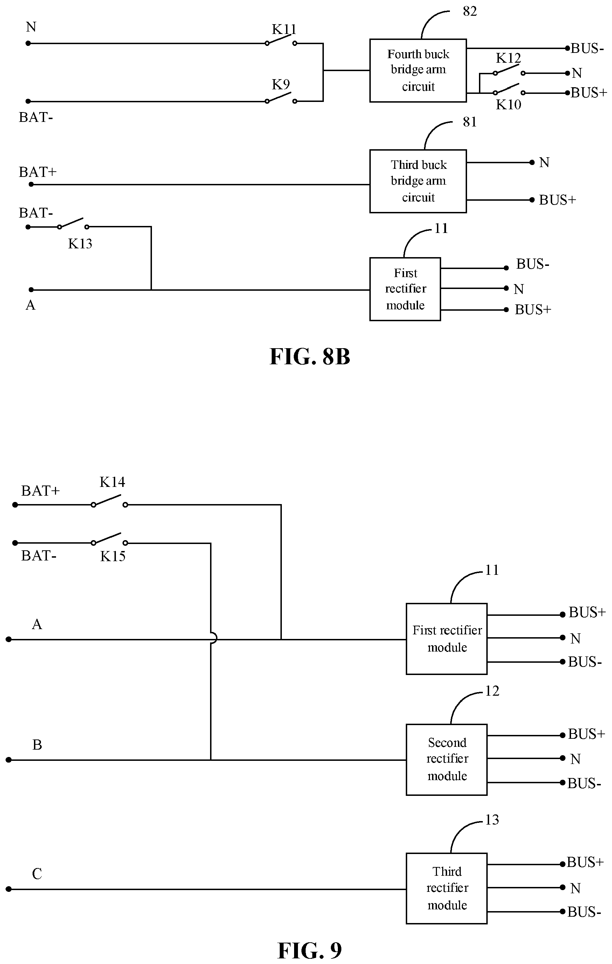

As may be known to those skilled in the art, in the aforementioned FIG. 8A, the positive half cycle portion of the charging and discharging module is shared as the balance bridge. In other implementations, the negative half cycle portion of the charging and discharging module may also be shared as the balance bridge. For example, when the BAT+ and BAT- in FIG. 8A are interchanged, the BUS+ and BUS- are simultaneously interchanged, and the structure of another charging and discharging module 14 as shown in FIG. 8B is obtained.

Exemplarily, as shown in FIG. 8B, the switch module includes a ninth switch K9, a tenth switch K10, an eleventh switch K11, a twelfth switch K12 and a thirteenth switch K13. The charging and discharging module 14 includes a third buck bridge arm circuit 81 and a fourth buck bridge arm circuit 82.

The first end of the fourth buck bridge arm circuit 82 forms a fourth end through the ninth switch K9, and the second end of the fourth buck bridge arm circuit 82 forms a fifth end through the tenth switch K10. The fourth end of the fourth buck bridge arm circuit 82 is connected to the negative electrode BAT- of the input end of the charging and discharging module. The fifth end of the fourth buck bridge arm circuit 82 is connected to the positive bus BUS+. The first end of the fourth buck bridge arm circuit 82 is connected to the neutral line N through the eleventh switch K11, and the second end of the fourth buck bridge arm circuit 82 is connected to the neutral line N through the twelfth switch K12.

The first end of the third buck bridge arm circuit 81 is connected to the positive electrode BAT+ of the input end of the charging and discharging module. The second end of the third buck bridge arm circuit 81 is connected to the positive bus BUS+, and the third end of the third buck bridge arm circuit 81 is connected to the neutral line N.

The input end of the first rectifier module 11 is further connected to the negative electrode BAT- of the energy storage power supply through the thirteenth switch K13.

Exemplarily, as shown in FIG. 8A, when the charging and discharging module charges the energy storage power supply, all of the tenth switch K10, the eleventh switch K11 and the thirteenth switch K13 are controlled to be switched off, and both the ninth switch K9 and the twelfth switch K12 are controlled to be switched on. The negative bus charges the negative electrode BAT- of the energy storage power supply through the third buck bridge arm circuit 81, and the positive bus charges the positive electrode BAT+ of the energy storage power supply through the fourth buck bridge arm circuit 82.

When the charging and discharging module discharges the energy storage power supply, all of the tenth switch K10, the eleventh switch K11 and the thirteenth switch K13 are controlled to be switched on, and both the ninth switch K9 and the twelfth switch K12 are controlled to be switched off. The energy storage power supply discharges through the first rectifier module 11 and the third buck bridge arm circuit 81, and the fourth buck bridge arm circuit 82 forms the balance bridge arm.

In the embodiments of the present application, by controlling the operating states of the ninth switch, the tenth switch, the eleventh switch, the twelfth switch and the thirteenth switch, the power supplying topology of the AC power supply, the charging and discharging topology of the energy storage power supply and the balance bridge topology are combined into one, which reduces the number of topologies and greatly reduces the complexity of the circuit. In addition, two topologies share some components (e.g., the sampling element and the inductor), which reduces the number of components, improves the utilization rate of components and reduces the cost of the circuit.

In some embodiments, each of the first buck bridge arm circuit, the second buck bridge arm circuit, the third buck bridge arm circuit and the fourth buck bridge arm circuit may include a respective inductor, and two respective switch components connected in series. For each of the first buck bridge arm circuit, the second buck bridge arm circuit, the third buck bridge arm circuit and the fourth buck bridge, the two switch components serve as a second end and a third end of the buck bridge arm circuit. A common point of the two switch components is connected to an end of the inductor, and another end of the inductor serves as a first end of the buck bridge arm circuit.

Exemplarily, the first buck bridge arm circuit, the second buck bridge arm circuit, the third buck bridge arm circuit and the fourth buck bridge arm circuit have the same structure. As shown in FIG. 7, each of the first buck bridge arm circuit 711 and the second buck bridge arm circuit 712 includes a respective inductor, and two respective switch components connected in series. For example, the two switch components connected in series of the first buck bridge arm circuit 711 are Q71 and Q72 respectively, and the two switch components connected in series of the second buck bridge arm circuit 712 are Q73 and Q74 respectively. The connection relationship of the components of the first buck bridge arm circuit 711 is illustrated by taking the first buck bridge arm circuit 711 as an example.

A free end of the switch component Q71 serves as the second end of the first buck bridge arm circuit 711. A free end of the switch component Q72 serves as the third end of the first buck bridge arm circuit 711. A common point of the switch component Q71 and the switch component Q72 is connected to the first inductor L1 and then serves as the first end of the first buck bridge arm circuit 711.

In the embodiments of the present application, not only the sampling element is shared, but also the inductor is shared. Since an inductor generally has a large size, not only the utilization rate of components is improved, but also the size of the circuit is reduced.

In some embodiments, the circuit topology includes three rectifier modules. Each of input ends of the three rectifier modules is connected to a respective one of three phases of the AC power supply, and output ends of the three rectifier modules are all connected to the DC bus. Input ends of two of the three rectifier circuits are further connected to a positive electrode and a negative electrode of the energy storage power supply through a fourteenth switch and a fifteenth switch respectively. When the AC power supply supplies power, both the fourteenth switch and the fifteenth switch are controlled to be switched off. When the energy storage power supply supplies power, both the fourteenth switch and the fifteenth switch are controlled to be switched on, and the energy storage power supply supplies power to the positive bus and the negative bus through a first rectifier module and a second rectifier module.

Here, the three rectifier modules may be the first rectifier module 11, the second rectifier module 12 and the third rectifier module 13 in FIG. 1. In the following, the first rectifier module 11, the second rectifier module 12 and the third rectifier module 13 in FIG. 1 are illustrated as examples.

Exemplarily, as shown in FIG. 9, the AC power supply is three-phase, and each phase is set with a rectifier module that jointly supplies power to the DC bus. Each of the output ends of the first rectifier module 11, the second rectifier module 12 and the third rectifier module 13 is connected to a respective DC bus (e.g., BUS+, BUS- or N).

The input end of the first rectifier module 11 is connected to a first phase (e.g., phase A) of the AC power supply, and the input end of the first rectifier module 11 is further connected to the positive electrode BAT+ of the energy storage power supply through the fourteenth switch K14.

An input end of the second rectifier module 12 is connected to a second phase (e.g., phase B) of the AC power supply, and the input end of the second rectifier module 12 is further connected to the negative electrode BAT- of the energy storage power supply through the fifteenth switch K 15.

An input end of the third rectifier module 13 is connected to a third phase (e.g., phase C) of the AC power supply.

In the embodiments of the present application, a fourteenth switch K14 and a fifteenth switch K15 are further provided.

When the AC power supply supplies power, both the fourteenth switch K14 and the fifteenth switch K15 are controlled to be switched off, and each of the first phase and the second phase of the AC power supply supplies power to a respective DC bus through a respective one of the first rectifier module 11 and the second rectifier module 12.

When the energy storage power supply supplies power, both the fourteenth switch K14 and the fifteenth switch K15 are controlled to be switched on, and the energy storage power supply supplies power to a respective DC bus (e.g., BUS+ or BUS-) through a respective one of the first rectifier module 11 and the second rectifier module 12.

It is to be noted that by setting a switch between each phase of the AC power supply and the corresponding rectifier module, the corresponding switch may be switched off when a certain phase of the AC power supply is abnormal, so as to avoid the interaction between the AC power supply and the topology.

In the embodiments of the present application, on one hand, when the energy storage power supply supplies power, the rectifier modules of two phases of the AC power supply are shared, and the DC bus is supplied with power by discharge of a combination of the first rectifier module and the second rectifier module. On the other hand, switching of the AC topology and the discharge topology of the energy storage power supply is realized by switching of the fourteenth switch and the fifteenth switch, and there is no need to provide a separate discharge topology of the energy storage power supply, which reduces the complexity of the circuit.

It is to be noted that in the embodiments of the present application, when the combined discharge of the first rectifier module and the second rectifier module is shared to supply power to the DC bus, the third rectifier module may serve as a rectifier module in any one of the aforementioned embodiments. In addition, the charging and discharging module (which is not shown in the embodiments of the present application) may also serve as the charging and discharging module in any one of the aforementioned embodiments.

Corresponding to the aforementioned embodiments, an embodiment of the present application further provides a power supply that includes the circuit topology provided by any one of the aforementioned embodiments and has the advantages of the aforementioned circuit topology, which would not be repeated herein.

The above are only implementations of the present application, but the scope of protection of the present application is not limited thereto. Any variations or replacements apparent to those skilled in the art within the technical scope disclosed by the present application shall fall within the scope of protection of the present application.

## Claims

1. A circuit topology, comprising at least one rectifier module and at least one charging and discharging module, wherein an input end of the rectifier module is connected to an Alternating Current (AC) power supply, and an output end of the rectifier module is connected to a Direct Current (DC) bus for rectifying the AC power supply to supply power to the DC bus, wherein an input end of the charging and discharging module is connected to an energy storage power supply, and an output end of the charging and discharging module is connected to the DC bus for discharge of the energy storage power supply to the DC bus and/or charge of the energy storage power supply with electrical energy from the DC bus, wherein the DC bus comprises a positive bus (BUS+), a negative bus (BUS-) and a neutral line (N);
wherein the circuit topology further comprises: one of the rectifier module and the charging and discharging module, as a target module; and a switch module, wherein at least one of a sampling element or an inductive element is disposed in the target module, and the target module is connected to the switch module, wherein when one of the switch module or the target module operates as a balance bridge arm, at least one of the sampling element or the inductive element is located on a connection line between a common point of the balance bridge arm and the neutral line (N), the sampling element is configured to sample an operating electrical parameter of the balance bridge arm, the inductive element serves as a balance bridge inductor, and the balance bridge arm is configured to control voltage balance between the positive bus (BUS+) and the negative bus (BUS-).

2. The circuit topology of claim 1, wherein the switch module is connected between an input end of the target module and the neutral line (N), or between the input end of the target module and the DC bus; and
when the AC power supply or the energy storage power supply supplies power to the DC bus through the target module, the switch module is controlled to be switched off; otherwise, the switch module and the target module are controlled such that one of the switch module or the target module operates as the balance bridge arm.

3. The circuit topology of claim 2, wherein when the target module is the rectifier module, the switch module comprises a first switch (K1), and the first switch (K1) is connected between the input end of the rectifier module and the neutral line (N); and
when the AC power supply supplies power to the DC bus through the rectifier module, the first switch (K1) is controlled to be switched off; otherwise, the first switch (K1) is controlled to be switched on, and the rectifier module is controlled to operate as the balance bridge arm.

4. The circuit topology of claim 2, wherein when the target module is the rectifier module, the switch module comprises a second switch (K2) and a third switch (K3), the second switch (K2) is connected between the input end of the rectifier module and the positive bus (BUS+), and the third switch (K3) is connected between the input end of the rectifier module and the negative bus (BUS-); and
when the AC power supply supplies power to the DC bus through the rectifier module, both the second switch (K2) and the third switch (K3) are controlled to be switched off; otherwise, the rectifier module is controlled to be in a non-rectifying state, and the second switch (K2) and the third switch (K3) are controlled to operate as the balance bridge arm.

5. The circuit topology of claim 4, wherein the rectifier module comprises a first inductor (L1), a vertical tube unit (41) and a horizontal tube unit(42), each of the vertical tube unit (41) and the horizontal tube unit (42) comprises two respective switch components connected in series, the first inductor (L1) is connected between the input end of the rectifier module and a common point of the two switch components of the vertical tube unit (41), the vertical tube unit (41) is connected between the positive bus (BUS+) and the negative bus (BUS-), and the horizontal tube unit (42) is connected between the common point of the two switch components of the vertical tube unit (41) and the neutral line (N); and
the rectifier module being controlled to be in the non-rectifying state specifically comprises that the horizontal tube unit (42) is controlled to be turned on.

6. The circuit topology of claim 2, wherein when the target module is the charging and discharging module, the switch module comprises a single-pole double-throw fourth switch (K4) and a single-pole double-throw fifth switch (K5), a common end of the fourth switch (K4) is connected to a positive electrode of the input end of the charging and discharging module, a common end of the fifth switch (K5) is connected to a negative electrode of the input end of the charging and discharging module, a first end of the fourth switch (K4) is connected to a positive electrode (BAT+) of the energy storage power supply, a first end of the fifth switch (K5) is connected to a negative electrode (BAT-) of the energy storage power supply, and both a second end of the fourth switch (K4) and a second end of the fifth switch (K5) are connected to the neutral line (N); and
when the charging and discharging module charges or discharges the energy storage power supply, both the first end of the fourth switch (K4) and the first end of the fifth switch (K5) are controlled to be switched on; otherwise, both the second end of the fourth switch (K4) and the second end of the fifth switch (K5) are controlled to be switched on, and the charging and discharging module is controlled to operate as the balance bridge arm.

7. The circuit topology of claim 6, wherein the charging and discharging module comprises two inductors, and a first switch component (Q51), a second switch component (Q52) and a third switch component (Q53) that are connected in series, a free end of the first switch component (Q51) and a free end of the third switch component (Q53) are connected to the positive bus (BUS+) and the negative bus (BUS-) respectively as output ends of the charging and discharging module, each of two ends of the second switch component (Q52) forms a common point with a respective one of the first switch component (Q51) and the third switch component (Q53), and each of the two ends of the second switch component (Q52) is connected to a respective one of the two inductors to serve as the input end of the charging and discharging module; and
the charging and discharging module being controlled to operate as the balance bridge arm specifically comprises that the first switch component (Q51) and the third switch component (Q53) are controlled to operate as the balance bridge arm, and the second switch component (Q52) is turned on such that the two common points form the common point of the balance bridge arm.

8. The circuit topology of claim 1, wherein when the target module is the charging and discharging module, the switch module comprises a sixth switch (K6), a seventh switch (K7) and an eighth switch (K8); when the sixth switch (K6) is connected between a positive electrode of the input end of the charging and discharging module and the positive bus (BUS+), and the seventh switch (K7) is connected between a negative electrode of the input end of the charging and discharging module and the negative bus (BUS-), the eighth switch (K8) is connected between the positive electrode of the input end of the charging and discharging module and the negative electrode of the input end of the charging and discharging module; and
wherein when the charging and discharging module charges or discharges the energy storage power supply, the sixth switch (K6), the seventh switch (K7) and the eighth switch (K8) are controlled to be switched off; otherwise, the charging and discharging module is controlled to be in a non-charging and non-discharging state, and the eighth switch (K8) is controlled to be switched on, such that the sixth switch (K6) and the seventh switch (K7) operate as the balance bridge arm, and a connection point of the positive electrode of the input end and the negative electrode of the input end of the charging and discharging module is called the common point of the balance bridge arm.

9. The circuit topology of claim 8, wherein the charging and discharging module comprises a first buck bridge arm circuit (711) and a second buck bridge arm circuit (712), each of a first end of the first buck bridge arm circuit (711) and a first end of the second buck bridge arm circuit (712) is connected to a respective one of the positive electrode and the negative electrode of the input end of the charging and discharging module, each of a second end of the first buck bridge arm circuit (711) and a third end of the second buck bridge arm circuit (712) is connected to a respective one of the positive bus (BUS+) and the negative bus (BUS-), and both a third end of the first buck bridge arm circuit (711) and a second end of the second buck bridge arm circuit (712) are connected to the neutral line (N); and
the charging and discharging module being controlled to be in the non-charging and non-discharging state specifically comprises that both of a switch component connected between a midpoint of the first buck bridge arm circuit (711) and the neutral line (N), and a switch component connected between a midpoint of the second buck bridge arm circuit (712) and the neutral line (N), are controlled to be turned on.

10. The circuit topology of claim 1, wherein when the target module is the charging and discharging module, the switch module comprises a ninth switch (K9), a tenth switch (K10), an eleventh switch (K11), a twelfth switch (K12) and a thirteenth switch (K13), and the charging and discharging module comprises a third buck bridge arm circuit (81) and a fourth buck bridge arm circuit (82), wherein a first end of the fourth buck bridge arm circuit (82) forms a fourth end through the ninth switch (K9), a second end of the fourth buck bridge arm circuit (82) forms a fifth end through the tenth switch (K10), each of a first end of the third buck bridge arm circuit (81) and a fourth end of the fourth buck bridge arm circuit (82) is connected to a respective one of a positive electrode and a negative electrode of the input end of the charging and discharging module, each of a second end of the third buck bridge arm circuit (81) and a third end of the fourth buck bridge arm circuit (82) is connected to a respective one of the positive bus (BUS+) and the negative bus (BUS-), a third end of the third buck bridge arm circuit (81) is connected to the neutral line (N), the first end of the fourth buck bridge arm circuit (82) is connected to the neutral line (N) through the eleventh switch (K11), the second end of the fourth buck bridge arm circuit (82) is connected to the neutral line (N) through the twelfth switch (K12), a fifth end of the fourth buck bridge arm circuit (82) is connected to one of the positive bus (BUS+) or the negative bus (BUS-), and the fourth end and the third end are not connected to the positive bus (BUS+) or the negative bus (BUS-) simultaneously;
the input end of the rectifier module is further connected to one of a positive electrode or a negative electrode (BAT-) of the energy storage power supply through the thirteenth switch (K13), and the input end of the rectifier module and the first end of the third buck bridge arm circuit (81) are not connected to the positive electrode or the negative electrode (BAT-) of the energy storage power supply simultaneously;
when the charging and discharging module charges the energy storage power supply, the tenth switch (K10), the eleventh switch (K 11) and the thirteenth switch (K13) are controlled to be switched off, the ninth switch (K9) and the twelfth switch (K12) are controlled to be switched on, and the DC bus charges the energy storage power supply through the third buck bridge arm circuit (81) and the fourth buck bridge arm circuit (82); and
when the charging and discharging module discharges the energy storage power supply, the tenth switch (K10), the eleventh switch (K11) and the thirteenth switch (K13) are controlled to be switched on, the ninth switch (K9) and the twelfth switch (K12) are controlled to be switched off, the energy storage power supply discharges through the rectifier module and the third buck bridge arm circuit(81), and the fourth buck bridge arm circuit (82) forms the balance bridge arm.

11. The circuit topology of claim 9 or 10, wherein each of the first buck bridge arm circuit (711), the second buck bridge arm circuit (712), the third buck bridge arm circuit (81) and the fourth buck bridge arm circuit (82) comprises a respective inductor and two respective switch components connected in series; for each of the first buck bridge arm circuit (711), the second buck bridge arm circuit (712), the third buck bridge arm circuit (81) and the fourth buck bridge, the two switch components serve as a second end and a third end of the buck bridge arm circuit, a common point of the two switch components is connected to an end of the inductor, and another end of the inductor serves as a first end of the buck bridge arm circuit.

12. The circuit topology of any one of claims 3 to 11, wherein the second switch (K2), the third switch (K3), the sixth switch (K6) and the seventh switch (K7) are switching tubes.

13. The circuit topology of any one of claims 1 to 11, wherein the sampling element is a Hall element.

14. The circuit topology of any one of claims 1 to 11, comprising three rectifier modules, wherein each of input ends of the three rectifier modules is connected to a respective one of three phases of the AC power supply, and output ends of the three rectifier modules are all connected to the DC bus, and a first one of the three rectifier module is further connected to a positive electrode (BAT+) of the energy storage power supply through a fourteenth switch (K14), and a second one of the three rectifier module is further connected to a negative electrode (BAT-) of the energy storage power supply through a fifteenth switch (K15); and
wherein when the AC power supply supplies power, both the fourteenth switch (K14) and the fifteenth switch (K15) are controlled to be switched off, and when the energy storage power supply supplies power, both the fourteenth switch (K14) and the fifteenth switch (K15) are controlled to be switched on, and the energy storage power supply supplies power to the positive bus (BUS+) and the negative bus (BUS-) through a first rectifier module and a second rectifier module.

15. A power supply, comprising the circuit topology of any one of claims 1 to 14.
